# EUROPEAN PATENT APPLICATION

(11) **EP 1 499 070 A2**
(43) Date of publication of application: **19.01.2005**
(21) Application number: 04103419.0
(22) Date of filing: 16.07.2004
(51) Int. Cl.: H04L 12/28

(54) **Integration of a plurality of short-range communication protocols**

(30) Priority: 18.07.2003 US 622883
(71) Applicant: Nokia Corporation, 02150 Espoo (FI)
(72) Inventor: Salokannel, Juha, 36240 Kangasala (FI); Lappeteläinen, Antti, 02200 Espoo (FI); Jantunen, Joni, 00500 Helsinki (FI); Laine, Hannu E., 02180 Espoo (FI); Reunamäki, Jukka, 33720 Tampere (FI); Tuupola, Juha-Matti, 33250 Tampere (FI); Ruuska, Päivi M., 33720 Tampere (FI)
(74) Representative: Derry, Paul Stefan

(57) **Abstract**

A system and method for integrating a plurality of short-range communication protocols, comprising a signaling protocol for enabling an enhanced host controller to share the use of an RF transceiver between a plurality of communication modules using a plurality of short-range communications protocols.

## Description

The present invention relates to the integration of short-range communication protocols

A typical wireless communication device (e.g., a cellular phone, door lock or anti-theft tag) may contain a communication module employing a short-range communication protocol such as Bluetooth, Low-End Extension (LEE), Radio Frequency Identification (RFID), or a number of the protocols under specification by the Infrared Data Association (IrDA). Users of such devices are commonly restricted to communicating with other devices employing the same short-range communication protocols. For example, a Bluetooth equipped cellular phone may only communicate with another Bluetooth equipped device such as a personal digital assistant (PDA) or laptop computer. Bluetooth is a wireless technology that operates in the unlicensed Industrial, Scientific, and Medical (ISM) radio band of 2.4GHz, that provides for wireless communication and networking between personal computers, cellular telephones, PDAs and other devices. The Bluetooth system is described in detail in the "Specification of the Bluetooth System" available at www.Bluetooth.com a copy of which is herein incorporated by reference.

Similarly, an LEE equipped sensor may only communicate with another LEE equipped device such as a door lock or billboard advertisement. The LEE protocol is another wireless technology that operates in the 2.4GHz radio band and provides for wireless communication between devices with low power requirements. More particularly, the LEE protocol allows Bluetooth devices to communicate with other devices that are developed for low-cost and low-power communications based on the Bluetooth protocol. The LEE protocol is described in PCT International Application Publication No. WO 02/073893 A1, a copy of which is incorporated herein by reference.

In contrast, various RFID tags have been developed to be compatible with Bluetooth equipped devices as well as other RFID equipped devices. Compatibility between the Bluetooth protocol and RFID protocol is described in, Bridgelall, R., "Bluetooth/802.11 Protocol Adaptation for RFID Tags," Proceedings of European Wireless 2002 Conference, Florence, Italy, February 26, 2002, a copy of which is herein incorporated by reference. RFID is a wireless automatic identification and data collection system that operates in the 2.4GHz radio band and allows for non-contact reading of data carried in transponders, generally known as tags. RFID tags are capable of allowing data to be retrieved by machine-readable means in particularly hostile environments where bar code labels could not survive. RFID is described in a number of standards available at www.rfid.org, copies of which are herein incorporated by reference.

To expand the communication capabilities of a single device, multi-mode devices have been developed. Multi-mode devices include the hardware and software necessary to allow for communication between several short-range communication protocols. Thus, for example, the communication module and software associated with two or more of the foregoing communication protocols may be included in such a device. Although these devices have obvious benefits, their additional hardware and software requirements are particularly cost prohibitive and burdensome to implement.

Thus, there is a need for a mechanism that effectively integrates a plurality of short-range communication protocols into a single device without extensive additional hardware and software requirements and at a relatively inexpensive cost.

The present invention overcomes the foregoing and other problems encountered in the known teachings by providing a system and method for integrating a plurality of different short-range communication modules such as, for example, Bluetooth, LEE and RFID modules into a single communication device in a cost effective manner so that the device may use any of the available communication modules for communication. Advantageously, the system and method comprises a modified Host Controller Interface (HCI) signaling protocol, which allows an enhanced Host Controller (eHC) to share the use of a Bluetooth RF transceiver among a plurality of different types of communication modules, such as a Bluetooth module, an LEE module and an RFID module, thus alleviating the need for additional hardware (e.g., HCI drivers and RF transceivers) and software typically associated with multi-mode devices. This is accomplished in part, by modification to the communication protocols between the eHC and LEE protocol and between the eHC and RFID protocol as will be discussed in detail hereinafter.

In one embodiment of the present invention, a system for integrating a plurality of short-range communication protocols, comprises: a signaling protocol for enabling an enhanced host controller to share the use of a single RF transceiver between a plurality of communication modules using a plurality of short-range communications protocols. The plurality of communication protocols may include, for example, Bluetooth, LEE and RFID protocols.

In another embodiment of the present invention, a communication device for integrating a plurality of short-range communication protocols, comprises: a host; an enhanced host controller in communication with the host, wherein the enhanced host controller employs a signaling protocol that enables the enhanced host controller to share the use of an RF transceiver between a plurality of communication modules; the plurality of communication modules in communication with the enhanced host controller, wherein the plurality of communication modules uses a plurality of short-range communication protocols and an RF transceiver. The plurality of communication protocols may include, for example, Bluetooth, LEE and RFID protocols.

In yet another embodiment of the present invention, a method of communicating with a first device for integrating a plurality of short-range communication protocols, the first device having an enhanced host controller to share the use of an RF transceiver between a plurality of communication modules using a plurality of short-range communications protocols, the method comprising: selecting a communication module to transmit a wireless communication to a second device; and transmitting the wireless communication to the second device within the first device's radio range. The plurality of communication protocols may include, for example, Bluetooth, LEE and RFID protocols.

The above advantages and features are of representative embodiments only, and are presented only to assist in understanding the invention. It should be understood that they are not to be considered limitations on the invention as defined by the claims, or limitations on equivalents to the claims. For instance, some of these advantages may seem mutually contradictory, in that they cannot be simultaneously implemented in a single embodiment. Similarly, some advantages are primarily applicable to one aspect of the invention. Thus, this summary of features and advantages should not be considered dispositive in determining equivalence. Additional features and advantages of the invention will become apparent in the following description, from the drawings, and from the claims.

The accompanying drawings illustrate certain embodiments of the invention.
FIG. 1 illustrates a representative arrangement employing the principles of one embodiment of the present invention;
FIG. 2 illustrates an exemplary communication module, which can be found in a tri-mode device, in accordance with one embodiment of the present invention;
FIG. 3 illustrates an exemplary high level state machine of the LEE Media Access Controller (MAC) in accordance with one embodiment of the present invention;
FIG. 4 is a flow chart illustrating an exemplary method by which a RFID Read operation may be performed in accordance with one embodiment of the present invention;
FIG. 5 is a flow chart illustrating an exemplary method by which an LEE Scan operation may be performed in accordance with one embodiment of the present invention;
FIG. 6 is a flow chart illustrating an exemplary method by which a Bluetooth Inquiry operation may be performed in accordance with one embodiment of the present invention;
FIG. 7 is a flow chart illustrating an exemplary method by which an LEE Connect operation may be performed in accordance with one embodiment of the present invention;
FIG. 8 is a flow chart illustrating an exemplary method by which a Bluetooth Connection operation may be performed in accordance with one embodiment of the present invention;
FIG. 9 is a flow chart illustrating an exemplary method by which an LEE Advertise operation may be performed in accordance with one embodiment of the present invention; and
FIG. 10 is a flow chart illustrating an exemplary method by which a Bluetooth Scan operation may be performed in accordance with one embodiment of the present invention.

In the following description of the various embodiments, reference is made to the accompanying drawings which form a part hereof, and which show by way of illustration various embodiments in which the invention may be practiced. It is to be understood that other embodiments may be utilized and structural and functional modifications may be made without departing from the scope of the present invention.

### I. OVERVIEW

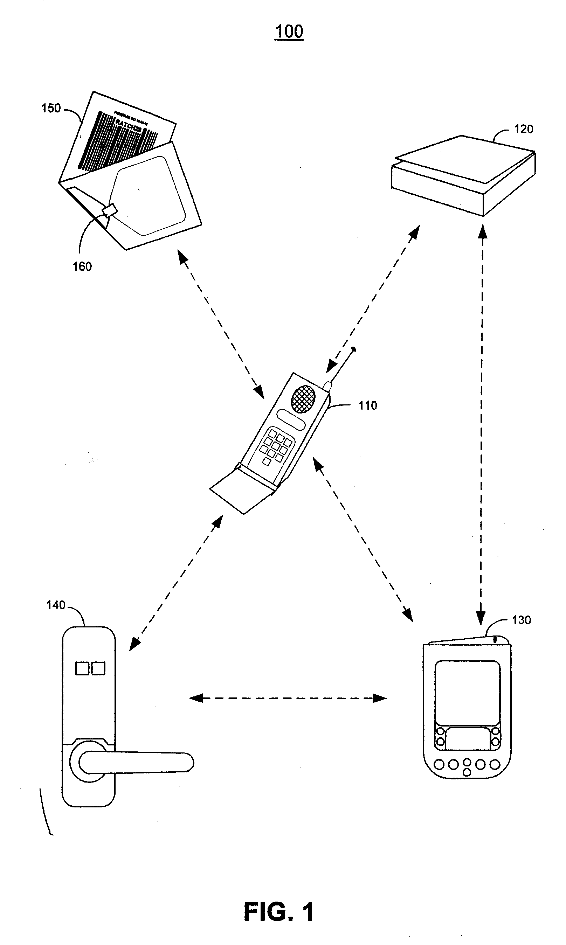

FIG. 1 illustrates a representative arrangement employing the principles of one embodiment of the present invention. As shown in FIG. 1, a wireless network 100 may include a plurality of wireless communication devices in communication with one another, such as a cellular phone 110, a scanner 120, a PDA 130, a door lock 140 and a Universal Product Code (UPC) bar code label 150 that includes an RFID tag 160. The interaction between these devices in accordance with one embodiment of the present invention will be discussed in detail hereinafter.

It will be appreciated that the devices disposed in network 100 may be any type of portable electronic devices such as laptop computers, radio headsets, garage door openers, animal tracking devices, etc. equipped with wireless communication capabilities. Likewise, the devices disposed in network 100 may be any type of fixed electronic devices such as desktop computers or other electronic equipment found in a home or office, such as "evolved" refrigerators, microwave ovens, television sets, or stereo equipment having wireless communication capabilities.

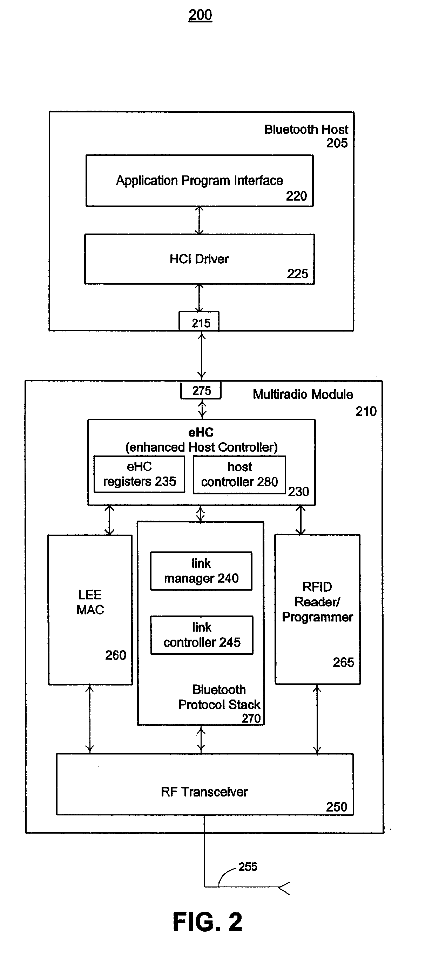

In the exemplary arrangement of FIG. 1, phone 110 may include in addition to general cellular communication modules a tri-mode short-range communication module that is equipped with Bluetooth, LEE and RFID communication capabilities, which enable it to communicate with any other device in network 100 that is equipped with at least one of these three short-range communication capabilities. In contrast, PDA 130 may only include a dual-mode communication module comprising Bluetooth and LEE communication capabilities, which enable it to communicate with any device in network 100 that is equipped with one of these two short-range communication capabilities. The tri-mode communication module of phone 110 and dual-mode communication module of PDA 130 will be discussed in detail hereinafter in connection with FIGS. 2-10.

In the arrangement of FIG. 1, scanner 120, door lock 140 and RFID tag 160 may include a single-mode communication module. For example, scanner 120 may only include a Bluetooth communication module and, thus, only be capable of wireless communication with other Bluetooth equipped devices. Similarly, door lock 140 may only include an LEE communication module and, thus, only be capable of wireless communication with other LEE equipped devices. Likewise, RFID tag 160, which is shown in FIG. 1 as being attached to UPC bar code label 150, only includes an RFID communication module that enables it to communicate with other RFID equipped devices. In some instances (i.e., when RFID/Bluetooth compatible signaling protocols are used), RFID tag 160 may also be capable of wireless communication with Bluetooth equipped devices.

In operation, phone 110 may communicate with any of the devices in network 100 because it includes Bluetooth, LEE and RFID short-range communication capabilities. For example, when phone 110 operates in LEE mode it may communicate with door lock 140 or PDA 130, when it is in RFID mode it may communicate with RFID tag 160, and when it is in Bluetooth mode it may communicate with scanner 120 and PDA 130. PDA 130, which, as mentioned above, functions as a dual-mode device, may communicate with phone 110 when in Bluetooth or LEE mode, scanner 120 when in Bluetooth mode and door lock 140 when in LEE mode. However, because scanner 120, door lock 140 and RFID 160 each possess different short-range communication protocols, they are unable to communicate with one another.

### II. Modified Communication Module

Figure 2 illustrates an exemplary communication module 200, which can be found in a tri-mode device (e.g., phone 110), in accordance with one embodiment of the present invention. As shown in FIG. 2, communication module 200 includes a Bluetooth Host 205 capable of using an enhanced signaling protocol and a multi-radio module 210 coupled together by physical interfaces 215 and 275. In addition to the Bluetooth protocol stack 270, RF transceiver 250 and antenna 255 typically disposed in a Bluetooth Host Controller, the multi-radio module 210 also includes an LEE Media Access Controller (MAC) 260 and an RFID reader/programmer 265.

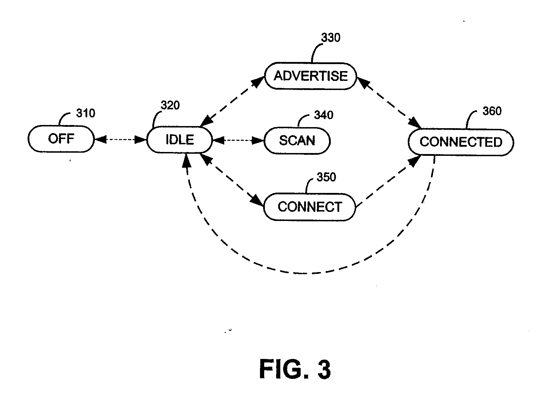

As further shown in FIG. 2, the multi-radio module 210 includes an enhanced Host Controller (eHC) 230 (i.e., a modified Bluetooth Host Controller), a physical bus interface 275 for connecting the multi-radio module 210 to the Host 205, the Bluetooth protocol stack 270 including a Link Manager (LM) 240 and a Link Controller (LC) 245, and the antenna 255. The eHC 230 also includes a Bluetooth Host Controller 280 and eHC registers 235, which enable the eHC 230 to share the use of the RF transceiver 250 among each of the LEE MAC 260, RFID reader/programmer 265 and Bluetooth protocol stack 270. It is to be noted that in an alternative embodiment the Bluetooth Host Controller 280 may be included in the Bluetooth protocol stack 270 and not in the eHC 230. In both cases, with respect to the Bluetooth Host Controller 280, the functionality visible to electronic components and software outside of the multi-radio module 210 is the same. The eHC registers 235 are illustrated below in table 1 and will be referenced hereinafter in connection with FIGS. 3-10.

**Table 1.**

| **Name** | **Function** |
|---|---|
| Rfowner | eHC indicates the protocol that is allowed to use the RF transceiver |
| LeaveRFtuned | eHC indicates to the protocols whether the RF transceiver should be turned down after usage |
| Rfstatus | The protocols indicate the status of the RF transceiver i.e., tuned to an RF or OFF |

The Bluetooth Host 205 is controlled by a microprocessor (not shown) and includes an Application Program Interface (API) 220, a Host Controller Interface (HCI) driver 225 and a physical interface 215 for connecting the Host 205 to the multi-radio module 210.

In accordance with the Bluetooth Specification, the Bluetooth Host 205 and Bluetooth Host Controller 280 enable communication with a number of other Bluetooth equipped devices. As shown in FIG. 2, the Host Controller 280 as part of the multi-radio module 210 is the portion of the communication module 200 that performs wireless communication with remote devices, whereas, the Host 205 performs the function of processing data transferred and received through the Host Controller 280 depending on the application defined by API 220. In operation, the Host Controller 280 may receive a wireless communication, in the form of a data packet, through antenna 255 and RF transceiver 250. The received data packet is then forwarded to the Bluetooth protocol stack 270, which then determines whether communication may be established or terminated. The LM 240, found in the Bluetooth stack 270, performs the function of determining whether or not the connections may be established or terminated. In addition, the LM 240, is used to determine whether the communication module 200 is to be a master or a slave when a connection is established with a remote device. If communication is established, the Bluetooth protocol stack 270 forwards the data packet to the eHC 230, which then processes the data and forwards it to the Host 205 for further processing.

Unlike the typical Bluetooth Host Controller discussed above, in accordance with the present invention, the eHC 230 and HCI driver 225 enable the LEE MAC 260, RFID reader/programmer 265 and Bluetooth stack 270 to share the use of the RF transceiver 250 and, thus, enable communication via any one of the Bluetooth LEE, RFID and Bluetooth protocols using the basic Bluetooth communication module's hardware. In order for this to be accomplished the signaling protocol between the Host 205 and the Host Controller 280 in the multi-radio module 210 is modified to allow for communication between the LEE, RFID and Bluetooth short-range protocols as will be discussed in detail hereinafter in section V.

### III. PROTOCOL BETWEEN LEE AND eHC

In this section, the basic functionality of the LEE MAC 260 will be described in connection with the protocol enabling the LEE MAC 260 to communicate with the eHC 230. LEE MAC 260 includes various registers that may be read from, or written to, by an upper layer, which in this embodiment may be the eHC 230 and Host 205, as will be referenced hereinafter in connection with FIGS. 3, 5, 7 and 9. As several of the LEE MAC 260's registers and their corresponding functions will be referenced throughout the ensuing discussion in connection with FIGS. 3, 5, 7 and 9, table 2, which illustrates each of the LEE MAC 260's registers and their corresponding function, is presented below.

**Table 2.**

| **Register Name** | **Register Function** |
|---|---|
| DEVICE ADDRESS0 | Device's address, e.g. IEEE address |
| DEVICE ADDRESS1 | Device's address, e.g. IEEE address |
| DEVICE ADDRESS2 | Device's address, e.g. IEEE address |
| DEVICE ADDRESS3 | Device's address, e.g. IEEE address |
| DEVICE ADDRESS4 | Device's address, e.g. IEEE address |
| SCAN DURATION | Scan mode duration |
| ADVERTISE SERVICE FIELD | Advertisement service field |
| ADVERTISE PERIOD | Advertisement period |
| CONNECT DESTINATION ADDRESS0 | Destination device's address, e.g. IEEE address |
| CONNECT DESTINATION ADDRESS1 | Destination device's address, e.g. IEEE address |
| CONNECT DESTINATION ADDRESS2 | Destination device's address, e.g. IEEE address |
| CONNECT DESTINATION ADDRESS3 | Destination device's address, e.g. IEEE address |
| CONNECT DESTINATION ADDRESS4 | Destination device's address, e.g. IEEE address |
| CONNECT SERVICE FIELD | Destination device's service field |
| CONNECT SERVICE FIELD MASK | Destination device's service field mask |
| CONNECT SETUP TIMEOUT | Connection trial period |
| CONNECTED ADDRESS0 | Connected device's address, e.g. IEEE address |
| CONNECTED ADDRESS1 | Connected device's address, e.g. IEEE address |
| CONNECTED ADDRESS2 | Connected device's address, e.g. IEEE address |
| CONNECTED ADDRESS3 | Connected device's address, e.g. IEEE address |
| CONNECTED ADDRESS4 | Connected device's address, e.g. IEEE address |
| CONNECTED SERVICE FIELD | Connected device's service field |
| SNIFF PARAMETERS | Parameters for sniff connection |
| SNIFF INTERVAL | Sniff interval period |
| SNIFF MAX PAYLOAD | Maximum payload length in sniff mode |
| SNIFF MAX RSP INTERVAL | Maximum number of ignored packets |
| CONNECTED SNIFF INTERVAL | Connected sniff interval period |
| CONNECTED SNIFF MAX PAYLOAD | Connected sniff maximum payload length |
| CONNECTED SNIFF MAX RSP INTERVAL | Connected sniff maximum number of ignored packets |
| ULIF CONNECT REQ | Initiator configuration information |
| ULIF CONFIG A REQ | Advertiser configuration information |
| ULIF TERMINATE C REQ | Termination configuration |
| ULIF SNIFF REQ | Sniff request configuration |
| CONNECTED CHANNEL | Channel used in connected mode |
| CONNECTED CHANNEL FORCE | Forced channel to be used |
| RSSI PARAMETERS | RSSI parameters |
| BMC CONFIG0 | Device's BMC block configuration |
| BMC CONFIG1 | Device's BMC block configuration |
| BMC CONFIG2 | Device's BMC block configuration |
| BMC CONFIG3 | Device's BMC block configuration |
| MAC CONFIG0 | Device's MAC block configuration |
| MAC CONFIG1 | Device's MAC block configuration |
| MAC CONFIG2 | Device's MAC block configuration |
| MAC CONFIG3 | Device's MAC block configuration |
| MAC CONFIG4 | Device's MAC block configuration |

FIG. 3 illustrates an exemplary high-level state machine of the LEE MAC 260 in accordance with one embodiment of the present invention. As shown in FIG. 3, the LEE MAC 260 offers four services (hereinafter referred to interchangeably as either states or services) to upper layers: Advertise 330, Scan 340, Connect 350 and data transfer (Connected) 360. Each of these services will be discussed in detail below.

### A. IDLE

As shown in FIG. 3, LEE MAC 260 enters the Idle state 320 from an OFF state 310. This occurs, for example, when a local LEE equipped device (local device) is powered on by a user. In the Idle state 320, a remote LEE equipped device (remote device) is not able to connect to a local device. Upon entering the Idle state 320, the user of an LEE equipped device may employ one of the four services offered by the LEE MAC 260. Table 3 illustrates requests, responses and indicators that may be transmitted between the upper layers and the LEE MAC 260 when the LEE MAC 260 is in the Idle state 320. In particular, table 3 includes for each data packet transmitted to or received by LEE MAC 260, the name of the data packet, the descriptor of the data packet, the direction of the transmission of the data packet and the next state that the LEE MAC 260 enters once the packet is transmitted. Thus, for example, if the upper layer transmitted a ULIF_SCAN_REQ packet, the LEE MAC 260 would initiate the SCAN service 340 and begin to scan for a remote device as will be discussed in section III. C., below.

**Table 3.**

| **Packet Name** | **Description** | **Direction** | **Next State** |
|---|---|---|---|
| ULIF_CONFIG_A_REQ | Start ADVERTISE service | UL⇒MAC | ADVERTISE |
| ULIF_SCAN_REQ | Start SCAN service | UL⇒C | SCAN |
| ULIF_CONNECT_REQ | Connect to remote device | UL⇒MAC | CONNECT |
| ULIF REGISTER_ACCESS_REQ | Write or read register value | UL⇒MAC UL⇒MAC | IDLE IDLE |
| ULIF_REGISTER_ACCESS_RSP | Response to register write or read | UL⇐MAC UL⇐MAC | IDLE IDLE |
| ULIF_RESET_REQ | Reset register values default values | to UL⇒MAC | IDLE |
| ULIF_RESET_RSP | Response to reset request | UL⇐MAC | IDLE |
| ULIF_ERROR_IND | Error indication | UL⇐MAC | IDLE |

### B. ADVERTISE

The Advertise service 330 shown in FIG. 3 enables a local device to become visible to a remote device when it is within the remote device's radio range. The operation of the Advertise service 330 is described in co-pending U.S. patent application no. 20020193072 entitled "Communication System, a Communication Device and a Method for Performing Communication" and also in co-pending U.S. patent application serial no. 10/224,768, entitled "Carrier Sensing Multiple Access with Collision Avoidance Scheme Optimized for A Priori Known Carrier Usage for Low Duty Cycle Systems," copies of which are herein incorporated by reference. Before entering the Advertise service 330 the information in the "Advertise_Period" and "Advertise_Service_Field" registers is written to the local device's ID_INFO PDU. An ID_INFO PDU (hereinafter referred to as a packet) is a packet structure used by the LEE protocol to establish a connection between a local device and a remote device when the remote device is within the local device's radio range. Thus, when a remote device receives a local device's ID_INFO packet, the accompanying service field information provides the remote device with information about the local device.

Table 4 illustrates requests, responses and indicators that may be transmitted between the eHC 230 and the LEE MAC 260 when the LEE MAC 260 is in the Advertise state 330. In particular, table 4 includes for each data packet transmitted to or received by LEE MAC 260, the name of the data packet, the descriptor of the data packet, the direction of the transmission of the data packet and the next state that the LEE MAC 260 enters once the packet is transmitted. Thus, for example, in order to initiate the Advertise service 330, a ULIF_CONFIG_A_RSP packet may be transmitted from the LEE MAC 260 to the upper layers. If, however, termination of the Advertise service 330 is desired a ULIF_TERMINATE_A_REQ packet may be transmitted from the upper layers to the LEE MAC 260, thus, effectuating termination of the Advertise service 330. In order to move from the Advertise state 330 to the Connected state 360 a ULIF_REMOTE_CONNECT_IND packet may be transmitted from the LEE MAC 260 to the upper layers, thus, enabling a remote device and a local device to enter the Connected service 360. Upon termination of the Connected service 360, the LEE MAC 260 will return to the Advertise service 330.

**Table 4.**

| **Packet Name** | **Description** | **Direction** | **Next State** |
|---|---|---|---|
| ULIF_CONFIG_A_RSP | Response to start ADVERTISE request | UL⇐MAC | ADVERTISE |
| ULIF_TERMINATE_A REQ | Terminate ADVERTISE service | UL⇒MAC | IDLE |
| ULIF_TERMINATE_A RSP | Response to terminate ADVERTISE request | UL⇐MAC | IDLE |
| ULIF_REGISTER_ACCESS REQ | Write or read register value | UL⇒MAC | ADVERTISE |
| ULIF_REGISTER_ACCES RSP | Response to register write or read request | UL⇐MAC | ADVERTISE |
| ULIF_RESET_REQ | Reset register values to default values | UL⇒MAC | IDLE |
| ULIF_ERROR_IND | Error indication | UL⇐MAC | IDLE |
| ULIF_RESET_RSP | Response to reset request | UL⇐MAC | IDLE |
| ULIF_REMOTE_ CONNECT_IND | Indication that remote device has connected to local device | UL⇐MAC | CONNECTED |

### C. SCAN

In the Scan service 340, the LEE MAC 260 informs a local device's upper layers of the presence of a remote device (when the remote device's Advertise service 330 is active). When an upper layer initiates the Scan service 340, the LEE MAC 260 begins to listen for a remote device's ID_INFO packet. If an ID_INFO packet is received through the antenna 255 and RF transceiver 250, the LEE MAC 260 collects the address and service field information contained therein. The LEE MAC 260 will continue to listen for a duration that is defined in the "Scan_Duration" register of the LEE MAC 260. Once the defined duration has elapsed, the LEE MAC 260 delivers the collected information in a ULIF_SCAN_REPORT_IND packet to the upper layers and returns to the IDLE state 320.

The Scan service 340 may be terminated prematurely by a ULIF_TERMINATE_S_REQ packet. When this occurs, the LEE MAC 260 will not return its ULIF_SCAN_REPORT_IND packet (even if it had received some ID_INFO packets before termination). Table 5 illustrates requests, responses and indicators that may be transmitted between the eHC 230 and the LEE MAC 260 during the SCAN service 340. In particular, table 5 includes for each data packet transmitted to or received by LEE MAC 260, the name of the data packet, the descriptor of the data packet, the direction of the transmission of the data packet and the next state that the LEE MAC 260 enters once the packet is transmitted.

**Table 5.**

| **Packet Name** | **Description** | **Direction** | **Next State** |
|---|---|---|---|
| ULIF_SCAN_RSP | Response to start SCAN request | UL⇐MAC | SCAN |
| ULIF_SCAN_REPORT IND | List of devices that were found during SCAN service | UL⇐MAC | IDLE |
| ULIF_TERMINATE_S REQ | Terminate SCAN service | UL⇒MAC | IDLE |
| ULIF_TERMINATE_S RSP | Response to terminate scan request | UL⇐MAC | IDLE |
| ULIF_REGISTER_ACCES REQ | Write or read register value | UL⇒MAC | SCAN |
| ULIF_REGISTER_ACCESS RSP | Response to register write or read request | UL⇐MAC | SCAN |
| ULIF_RESET_REQ | Reset register values to default values | UL⇒MAC | IDLE |
| ULIF_RESET_RSP | Response to reset request | UL⇐MAC | IDLE |
| ULIF_ERROR_IND | Error indication | UL⇐MAC | IDLE |

### D. CONNECT

The LEE MAC 260 will enter the Connect service 350 when an upper layer transmits a ULIF_CONNECT_REQ packet to it. As mentioned above, the packet will contain the address and service field information of a remote device with whom a connection is sought. The connection may be made to any device from which an ID_INFO packet, which includes its address and service field information, is received or to a specific device whose address has been previously obtained from, for example, the Scan service 340. If the upper layer requests a connection to a specific remote device, the device's address must be configured to registers "Connect_Destination_Addr0-4" of the LEE MAC 260 prior to transmitting the ULIF_CONNECT_REQ packet to the remote device. Connection to the remote device can also be made according to the service field or some subset of the service field of the remote device. In that case, the corresponding "service field" and "mask" defining the subset must be configured to the "Connect_Service_Field" and "Connect_Service_Field_Mask" registers of the LEE MAC 260, respectively. The "Connect_Service_Field_Mask" register defines the bits of the service field that must be taken into account when comparing the service field defined in the "Connect_Service_Field" register and the service fields obtained from the received ID_INFO packets.

The connection setup procedure used in the Connect state 350 is discussed in unfiled patent application attorney docket no. 4208-4131, entitled "Connected Mode for Low-End Radio," a copy of which is herein incorporated by reference. Upon receipt of the first ID_INFO packet the LEE MAC 260 returns a ULIF_CONNECT_RSP packet with a successful Connect_Status signal to the upper layer and enters Connected service 360. If the LEE MAC 260 of the local device does not receive another device's ID_INFO packet from the upper layers within the time defined in the "Connect_Setup_Time_Out" register, the LEE MAC 260 will enter the Idle state 320 and return the ULIF_CONNECT_RSP packet with an unsuccessful Connect_Status signal to the upper layer. The connection setup procedure can also be prematurely terminated with a ULIF_TERMINATE_C_REQ packet sent from the upper layers. Thus, for example, if the LEE MAC 260 is commanded to prematurely terminate the connection setup procedure, it will return a ULIF_TERMINATE_C_RSP packet and return to the Idle state 320. Table 6 illustrates the set of requests, responses and indicators that can be sent or received during the Connect service 350. In particular, table 6 includes for each data packet transmitted to or received by LEE MAC 260, the name of the data packet, the descriptor of the data packet, the direction of the transmission of the data packet and the next state that the LEE MAC 260 enters once the packet is transmitted.

**Table 6.**

| **Packet Name** | **Description** | **Direction** | **Next state** |
|---|---|---|---|
| ULIF_TERMINATE_C REQ | Terminate connection setup | UL⇒MAC | IDLE |
| ULIF_TERMINATE_C RSP | Response to terminate connection setup request | UL⇐MAC | IDLE |
| ULIF_REGISTER_ACCESS REQ | Write or read register value | UL⇒MAC | CONNECT |
| ULIF_REGISTER_ACCESS RSP | Response to register write or read request | UL⇐MAC | CONNECT |
| ULIF_RESET_REQ | Reset register values to default values | UL⇒MAC | IDLE |
| ULIF_RESET_RSP | Response to reset request | UL⇐MAC | IDLE |
| ULIF_ERROR_IND | Error indication | UL⇐MAC | IDLE |

### E. CONNECTED

The Connected service 360 may be entered from either the Connect service 350 or the Advertise service 330. As mentioned above, in the connect service 350, a local device initiates a connection with a remote device, and in the Advertise service 330, a remote device initiates a connection with a local device. Once in the Connected service 360, the connected local and remote devices may transmit data packets to one another. More particularly, each device's upper layer delivers data to its LEE MAC transmit buffer using ULIF_DATA_PDU packets. When each device's transmit buffer is empty (i.e., when upper layers have not sent any ULIF_DATA_PDUs to their LEE MACs) any data packets transmitted between the devices are empty. In this manner, the communication channel between the devices is kept occupied whenever connected, with the exception of the transmit/receive turn-around time between packets.

If the connection between the remote and local device does not require a high data rate, the upper layers of each device may command the connected LEE MAC's of both devices to enter into a sniff mode. In sniff mode, the interval between the data packet exchange is much longer than in normal connection mode. In addition, the maximum payload length can be reduced from its maximum of 255 bytes in order to avoid interference and to control the maximum duty cycle. The interval and payload parameters are configured with the "Sniff_Interval" and "Sniff_Max_Payload" registers of the LEE MAC 260, respectively.

An upper layer can terminate a connection by sending a ULIF_TERMINATE_C_REQ packet to the LEE MAC 260. LEE MAC 260 then transmits the terminate packet to the LEE MAC of the connected remote device. When the connection is terminated in the above manner, the data in the transmit buffer in the LEE MAC 260 is lost. Alternatively, the connection can be terminated by sending the terminate packet to the remote device's host only when the transmit buffer is empty. In another approach, all transmitted packets are accounted for by an acknowledgement message and the upper layers have no additional data to transmit. After receiving the termination packet, from, for example, a remote device, the LEE MAC 260 sends a ULIF_REMOTE_TERMINATE_IND packet to the upper layers to indicate that the remote device has ended the connection. The ULIF_REMOTE_TERMINATE_IND packet may also be sent if the connection is lost for some other reason, for example, if the remote device has left the local device's radio range.

Table 7 illustrates possible requests, responses and indicators that may be transmitted between the eHC 230 and the LEE MAC 260 during the Connected service 360. In particular, table 7 includes for each data packet transmitted to or received by LEE MAC 260, the name of the data packet, the descriptor of the data packet, the direction of the transmission of the data packet and the next state that the LEE MAC 260 enters once the packet is transmitted. For example, if a remote device rejects a connection initiated by the ULIF_CONNECT_RSP packet transmitted by a local device, the local device's LEE MAC 260 will enter the Idle state 320. In addition, if the LEE MAC 260 was previously in the Advertise service 330 (when the ULIF_TERMINATE_C_REQ packet was transmitted), the LEE MAC 260 will restart the Advertise service 330 after the connection is terminated, unless specifically commanded into Idle state 320 by an upper layer. Similarly, if the LEE MAC 260 was previously in the Connect service 350 (when the ULIF_REMOTE_TERMINATE_IND packet was transmitted), the LEE MAC 260 will restart the Idle service 320 after its connection is terminated.

**Table 7.**

| **Packet Name** | **Description** | **Direction** | **Next state** |
|---|---|---|---|
| ULIF_CONNECT_RSP | Response to connect request | UL⇐MAC | CONNECTED |
| ULIF_TERMINATE_C REQ | Terminate connection request | UL⇒MAC | IDLE |
| ULIF_TERMINATE_C RSP | Response to terminate connection request | UL⇐MAC | IDLE |
| ULIF_REGISTER_ACCESS_REQ | Write or read register value | UL⇒MAC | CONNECTED |
| ULIF_REGISTER_ACCESS RSP | Response to register write or read request | UL⇐MAC | CONNECTED |
| ULIF_RESET_REQ | Reset register values to default values | UL⇒MAC | IDLE |
| ULIF_RESET_RSP | Response to reset request | UL⇐MAC | IDLE |
| ULIF_ERROR_IND | Error indication | UL⇐MAC | IDLE |
| ULIF_DATA_PDU | Data pdu from/to user | UL⇔MAC | CONNECTED |
| ULIF_SNIFF_REQ | Sniff request | UL⇒MAC | CONNECTED |
| ULIF_SNIFF_RSP | Response to sniff request | UL⇐MAC | CONNECTED |
| ULIF_REMOTE_SNIFF IND | Indication that remote device has sent sniff request | UL⇐MAC | CONNECTED |
| ULIF_REMOTE_TERMINATE_IND | Indication that remote device has terminated the connection or the connection is lost | UL⇐MAC | IDLE |

### IV. PROTOCOL BETWEEN RFID AND eHC

In this section, the ISO/IEC 15693 (Part 3) transmission protocol's upper layer commands employed by an ISO/IEC 15693 compatible Tag-it HF tag system (developed by Texas Instruments) are illustrated to serve as an example of how Bluetooth and RFID protocols can be synchronized to share the same RF transceiver. The Texas Instruments Tag-it Transponder Protocol Reference Manual, which describes the operation of the Tag-it HF tag system, available at http://www.ti-rfid.com, is herein incorporated by reference. The ISO/IEC 15693 standard is one of a series of International Standards describing the parameters for identification cards as defined in ISO/IEC 7810. Part 3 of ISO/IEC 15693 describes the anticollision and transmission protocols and is described in detail in the "ISO/IEC 15693-3 (2001) Identification Cards - Contactless Integrated Circuit(s) Cards - Vicinity Cards - Part 3: Anticollision and Transmission" protocol available at www.iso.ch, a copy of which is incorporated herein by reference.

The Tag-it HF system includes a reader and associated transponders. The reader (e.g., the RFID reader/programmer 265) is controlled by the communication module 200. The transponders (e.g., RFID tag 160) include an antenna, a resonance capacitor and an integrated circuit. In accordance with the present invention, the transponder's integrated circuit is powered on by the communication module 200's antenna 255. Thus, when the communication module 200 comes into the range of a transponder associated with the RFID reader/programmer 265, the transponder is powered on and, thus, capable of transmitting messages to the RFID reader/programmer 265.

Table 8 presents the upper layer interface commands of the ISO/IEC 15693 compatible Tag-it HF tag system. Each command listed in table 8 has a specific response packet. In accordance with the present invention, the host 205 may initiate a message exchange, for example, by transmitting a request for information (e.g., an HCI_Inquiry) about a remote transponder to the eHC 230. As indicated by the ISO/IEC 15693 standard, the HCI_Inquiry command is translated into a Read_Transponder_Details command. In response, the eHC 230 transmits the Read_Transponder_Details command to the RFID reader/programmer 265 (which enables the RFID reader/programmer 265 to read the details of a remote transponder). If the eHC 230's RFowner register is set to RFID, the RFID reader/programmer 265 attempts to the read the details of a remote transponder. If a remote transponder is present, the transponder will transmit identification information to the RFID reader/programmer 265, which will then transmit this information to the eHC 230. The eHC 230 will subsequently translate the received RFID reader/programmer 265's information and forward it to the Host 205, as will be discussed in detail hereinafter in section V.

**Table 8.**

| **Command** | **Short description** |
|---|---|
| Read_Block | Reads a single block of data from Tag-it HF transponder |
| Write_Block | Writes a single block of data to a Tag-it HF transponder |
| Lock_Block | Locks a single block of data in a Tag-it HF transponder |
| Read_Transponder _Details | Reads the details of a Tag-it HF transponder |
| Special_Read_Block | Reads blocks of data from a Tag-it HF transponder |
| Initiate_Flash_Loader | Initialize and transfer control to the FLASH loader software |
| Send_Data_to_Flash | Load data into the FLASH memory |
| Reader_Version | Requests the version number of the reader |
| Reader_Inputs | Reads the state of the reader inputs |
| Write_Reader_Outputs | Writes the state of the reader outputs |
| RF_Carrier_on/off | Switches the RF carrier on or off |

### V. PROTOCOL BETWEEN HCI AND eHC

In accordance with one embodiment of the present invention, the Bluetooth HCI commands and the actions of the eHC 230, the eHC registers 235 and the HCI driver 225 enable the LEE and RFID protocol's control information to be carried between the Host 205 and eHC 230 (in addition to the Bluetooth control information). The following paragraphs will highlight several examples of how to modify common Bluetooth HCI commands toward this end and will illustrate the resulting interactions between Host 205's and eHC 230's components. Because certain HCI commands are relevant only to Bluetooth and not to the LEE MAC 260 or RFID reader/programmer 265 they will not be discussed herein. Instead, the Bluetooth HCI commands relating to device discovery and setup in the tri-mode and dual-mode device implementations of the present invention will be discussed in detail hereinafter.

As will be seen, in one embodiment of the present invention, a new parameter "used radios" is written to the eHC 230 from the Host 205 for directing the Host 205's commands to a stack (i.e., Bluetooth stack 270, LEE MAC 260 or RFID reader/programmer 265) in the multi-radio module 210. The ''used radios" parameter, which may be one byte in length, typically only uses three bits to identify which stacks are to be enabled. The structure of the "used radios" parameter is such that if the first least significant bit (lsb) = 1, the RFID reader/programmer stack 265 is enabled, if the second lsb = 1, the LEE MAC 260 is enabled and if the third lsb = 1, the Bluetooth stack 270 is enabled. Table 9 illustrates which stacks are enabled when the ''used radios" parameter uses a three-bit identification scheme.

**Table 9.**

| **Used Radios** | **Function** |
|---|---|
| 000 | No stacks enabled |
| 001 | RFID reader/programmer 265 enabled |
| 010 | LEE MAC 260 enabled |
| 011 | RFID reader/programmer 265 and LEE MAC 260 enabled |
| 100 | Bluetooth stack 270 enabled |
| 101 | Bluetooth stack 270 and RFID reader/programmer enabled |
| 110 | Bluetooth stack 270 and LEE MAC 260 enabled |
| 111 | Bluetooth stack 270, LEE MAC 260 and RFID reader/programmer 265 enabled |

In addition to the ''used radios" parameter, a new parameter ''priority'' is used by the Host 205 to set the order of how the stacks are enabled in the ''used radios" parameter. For example, if all of the bits in the ''used radios" parameters are set with the "priority" parameter, the Bluetooth stack 270 can be enabled to inquiry first, followed by the RFID reader/programmer 265 and the LEE MAC 260. The default "priority" parameter is typically set, however, to enable the RFID reader/programmer 265 first, followed by the LEE MAC 260 and Bluetooth stack 270. This configuration is believed to be very efficient because the RFID inquiry is faster than the LEE and Bluetooth inquiries, and the LEE inquiry is faster than the Bluetooth inquiry. In some instances, the "priority" parameter is not employed because only one stack may be enabled, or in other instances, if one of several stacks is disabled, the "priority" parameter will ignore the disabled stack and move on to the next stack. In addition to the new parameters "used radios" and "priority," when a command is transmitted in the LEE protocol, the Bluetooth address field is included in the LEE command. This occurs, because the LEE protocol uses a one byte shorter address than the Bluetooth protocol, which enables the Bluetooth address to be included in the most significant byte of the LEE command. With regard to the RFID protocol, the Bluetooth address field is not included in the RFID commands.

### A. HCI Link Control Commands

### 1. HCI_Inquiry

The first of the HCI Link Control Commands to be modified is the HCI_Inquiry command. In accordance with the present invention, the HCI_Inquiry command can be designated to one or more of the protocol stacks (i.e., LEE MAC 260, RFID reader/programmer 265 or Bluetooth stack 270) found in the a multi-mode device such as tri-mode device of FIG. 2. When a stack to be used is not uniquely defined, the eHC 230 commands the stacks one by one in an order defined by the Host 205 with the "priority" parameter.

The Bluetooth parameters of a conventional HCI_Inquiry are LAP, Inquiry_Length and Num_Responses. In accordance with one embodiment of the present invention, the additional parameter "used radios" is employed in the HCI_Inquiry command. As discussed above, the "used radios" parameter directs the Host 205's commands to a stack in the multi-radio module 210. In this embodiment, the ''used radios" parameter is structured such that if the first least significant bit (lsb) =1, the RFID reader/programmer stack 265 is enabled, if the second lsb = 1, the LEE MAC 260 is enabled and if the third lsb = 1, the Bluetooth stack 270 is enabled.

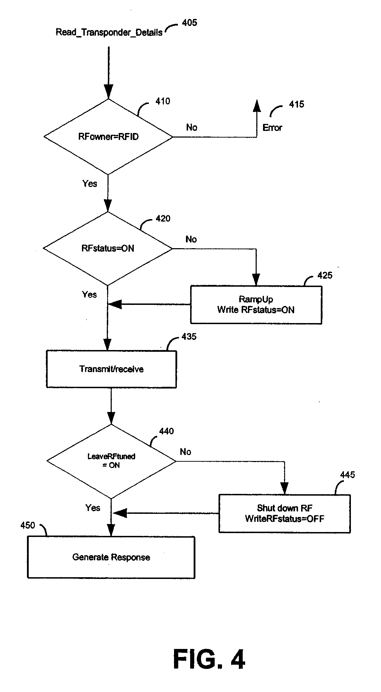

In operation, when an HCI_Inquiry is transmitted from the Host 205 to the eHC 230, the eHC 230 responds with an HCI_Command_Status_event packet and selects the protocol stack to be employed according to the "used radios" parameter. The actions are handled in order according to the "priority" parameter. The default order is the RFID reader/programmer 265 being queried first, followed by the LEE MAC 260 and the Bluetooth stack 270. After receiving the HCI_Inquiry, the eHC 230 begins to query the RFID reader/programmer 265 in accordance with the "used radios" parameter by setting the eHC 230's registers RFowner = RFID and LeaveRFtuned = ON. The eHC 230 subsequently transmits a Read_Transponder_Details command to RFID reader/programmer 265 (in order to get the RFID reader/programmer 265 to acquire the details of any remote transponders within the communication module 200's radio range), which employs, for example, the ISO/IEC 15693-3 (2001) standard. It is noted, that any equivalent or similar RFID standard may be employed by the present invention. After receipt of the Read_Transponder_Details command the RFID reader/programmer 265 executes the operations according to FIG. 4.

Figure 4 is a flow chart illustrating an exemplary method by which an RFID Read may be performed in accordance with one embodiment of the present invention. In step 405 of FIG. 4, the RFID reader/programmer 265 receives a Read_Transponder_Details command, which asks the RFID reader/programmer 265 to provide details to the eHC 230 of any transponders in module 200's radio range, from the eHC 230. In step 410, the RFowner (e.g., RFID, LEE or Bluetooth) is determined. If the RFowner is RFID (in this example it is RFID because the eHC 230 set its RFowner register to RFID), the RFstatus (e.g., either "ON" or "OFF") is subsequently determined (step 420). If the RFowner is not RFID (e.g., LEE or Bluetooth), an error message is sent back to the eHC 230 and the eHC 230 moves to the next stack indicated by the "used radios" parameter (step 415). If the RFstatus is determined to be OFF, the RFstatus is turned ON by writing the RFstatus register of the eHC 230 to ON (step 425).

Once the RFstatus is turned ON, the RFID reader/programmer 265 may enter a transmit/receive mode (step 435) and, thus, enable the RFID reader/programmer 265 to communicate with remote transponders. In step 440, the eHC 230's LeaveRFtuned register is checked to see if it is set to ON. If this register is set to ON, the RFID reader/programmer 265 may continue to communicate with remote transponders and transmit their identification information (if any was received) to the eHC 230 in an HCI_Inquiry_Result_event packet (step 450). If the LeaveRFtuned register is set to OFF, the RF connection is shut down by writing the RFstatus register of the eHC 230 to OFF (step 445). In this case, the eHC 230 would receive, for example, a response from the RFID reader/programmer 265 indicating that no transponders are within module 200's radio range (step 450).

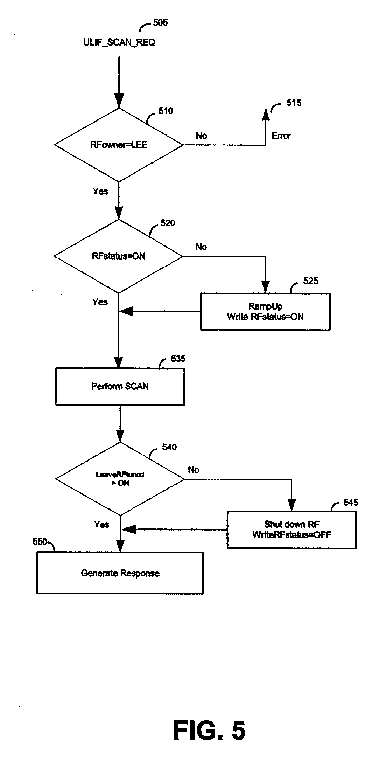

After completing the RFID Inquiry, the eHC 230 sets register RFowner = LEE (in accordance with the ''used radios" parameter) and transfers the LEE MAC 260 to the Scan state 340 by transmitting a ULIF_SCAN_REQ packet (previously illustrated in table 3). The LEE MAC 260 executes the operations according to FIG. 5, which is a flow chart illustrating an exemplary method by which an LEE Scan 340 may be performed in accordance with one embodiment of the present invention. In step 505 of FIG. 5, the LEE MAC 260 receives a ULIF_SCAN_REQ command from the eHC 230. In step 510, the RFowner is determined and, if the RFowner is LEE the RFstatus is subsequently determined (step 520). If the RFowner is not LEE, an error message is sent to the eHC 230 and the eHC 230 moves to the next stack indicated by the "used radios" parameter (step 515). If the RFstatus is determined to be OFF, the RFstatus is turned ON by writing the RFstatus register of the eHC 230 to ON (step 525).

Once the RFstatus is turned ON, the LEE MAC 260 performs the Scan service 340 (step 535). In the Scan service 340, the LEE MAC 260 scans for remote LEE equipped devices within module 200's radio range and, if any of the LEE equipped devices are within module 200's radio range, the LEE MAC 260 will receive an ID_INFO packet containing their identification information. In step 540, the eHC 230's LeaveRFtuned register is checked to see if it is set to ON and, if this register is set to ON, the LEE MAC 260 may generate a response such as an HCI_Inquiry_Result_event command (which contains a remote device's ID_INFO packet that was received during the Scan service 340) and forward it to the eHC 230 (step 550). If the LeaveRFtuned register is set to OFF, the RF connection is shut down by writing the RFstatus register of the eHC 230 to OFF (step 545). In this case, the eHC 230 would receive, for example, an unsuccessful connection response or a response containing no data from the LEE MAC 260 (step 550).

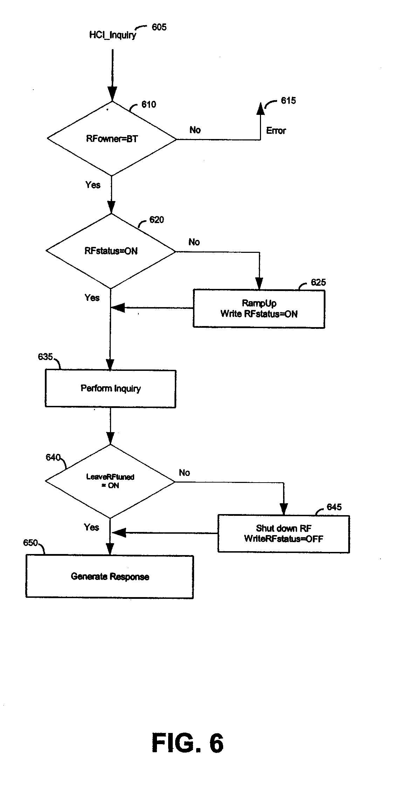

Upon completion of the LEE Inquiry, the eHC 230 sets register RFowner = BT and register LeaveRFtuned = OFF and transmits an HCI_Inquiry to the Bluetooth stack 270, which executes the operations in accordance with FIG. 6. Figure 6 is a flow chart illustrating an exemplary method by which a Bluetooth Inquiry may be performed in accordance with one embodiment of the present invention. In step 605 of FIG. 6, the Bluetooth stack 270 receives an HCI_Inquiry from the eHC 230. In step 610, the RFowner is determined and, if the RFowner is Bluetooth the RFstatus is subsequently determined (step 620). If the RFowner is not Bluetooth, an error message is sent to the eHC 230 and, if the Bluetooth stack 270 was the final stack indicated by the "used radios" parameter, the eHC 230 transmits an Inquiry_complete_event packet, which includes the results of the HCI_Inquiry, to the Host 205 (step 615). If the RFstatus is determined to be OFF, the RFstatus is turned ON by writing the RFstatus register of the eHC 230 to ON (step 625).

Once the RFstatus is turned ON, the Bluetooth stack 270 performs a Bluetooth Inquiry to determine if there are any Bluetooth equipped remote devices within module 200's radio range (step 635). In step 640, the eHC 230's LeaveRFtuned register is checked to see if it is set to ON. If this register is set to ON, the Bluetooth stack 270 may generate a standard inquiry response (i.e., an HCI_Inquiry_Result_event command, which includes information from Bluetooth equipped devices with module 200's radio range) and forward it to the eHC 230 (step 650). If the LeaveRFtuned register is set to OFF, the RF connection is shut down in step 645 by writing the RFstatus register of the eHC 230 to OFF and, in this case, the eHC 230 would receive an unsuccessful connection response from the Bluetooth stack 270 (step 650). Finally, after all the stacks indicated by the "used radios" parameter have been queried, the eHC 230 transmits an HCI_Inquiry_Complete_event command to the Host 205 and the HCI_Inquiry is ended.

### 2. HCI_Inquiry_Resutt_event and HCI_Inquiry_Complete_event

In accordance with one embodiment of the present invention, the HCI_Inquiry_Result_event command, which includes the conventional Bluetooth parameters: Num_Responses, BD_ADDR[i], Page_Scan_Repetition_Mode[i], Page_Scan_Period_Mode[i], Page_Scan_Mode[i], Class_of_Device[i] and Clock Offset[i], also includes the new parameter "used radios" parameter, which is structured such that if the first least significant bit (lsb) = 1, the RFID reader/programmer stack 265 is enabled, if the second lsb = 1, the LEE MAC 260 is enabled and if the third 1sb = 1, the Bluetooth stack 270 is enabled. In accordance with the present invention, only one of the stacks indicated by the "used radios" parameter may be available in a single HCI_Inquiry_Result_event command. Thus, a separate HCI_Inquiry_result_event command must be transmitted for each of the stacks. None of the conventional Bluetooth parameters are modified with respect to the HCI_Inquiry_Complete_event command.

### 3. HCI_Periodic_Inquiry_Mode and HCI_Exit_Periodic_Inquiry_Mode

The HCI_Periodic_Inquiry_Mode command, which includes conventional Bluetooth parameters: Max_Period_Length, Min_Period_Length, LAP, Inquiry_Length and Num_Responses, also includes the "used radios" parameter, which is structured such that if the first least significant bit (lsb) = 1, the RFID reader/programmer stack 265 is enabled, if the second lsb = 1, the LEE MAC 260 is enabled and if the third lsb = 1, the Bluetooth stack 270 is enabled and the "priority" parameter, which sets the order of how stacks are enabled in the "used radios" parameter. In operation, the HCI_Periodic_Inquiry _Mode command may be periodically transmitted by the eHC 230. If, however, the Bluetooth stack 270 is enabled the eHC 230 will not transmit the HCI_Periodic_Inquiry_Mode command, rather it will use an HCI_Inquiry command in its place. None of the conventional Bluetooth parameters are modified with respect to the HCI_Exit_Periodic_Inquiry_Mode command.

### 4. HCI_Create_Connection

The HCI_Create_Connection command, which includes the conventional Bluetooth parameters: BD_ADDR, Packet_Type, Page_Scan _Repetition_Mode, Page_Scan_Mode, Clock_Offset and Allow_Role_Switch, also includes the "used radios" parameter, which is structured such that if the second lsb = 1, the LEE MAC 260 is enabled and if the third lsb = 1, the Bluetooth stack 270 is enabled and the "priority" parameter, which sets the order of how stacks are enabled in the ''used radios" parameter.

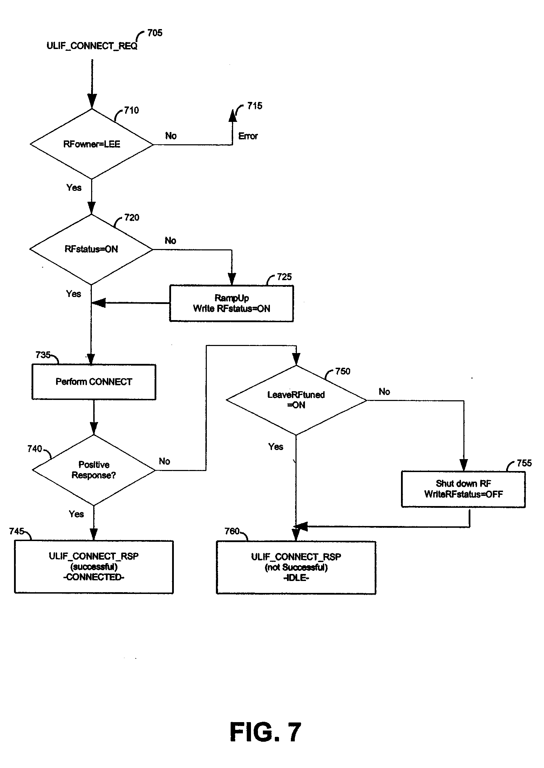

When the HCI_Create_Connecton command is transmitted from the Host 205 to the eHC 230, the eHC 230 transmits a Command_Status_event packet to the stack indicated by the "used radios" parameter. Because the LEE MAC 265 is indicated as first to be enabled, the eHC 230 sets the registers RFowner = LEE and LeaveRFtuned = ON. Subsequently, the LEE MAC 260 transmits a ULIF_CONNECT_REQ packet and executes the operations according to FIG. 7. Figure 7 is a flow chart illustrating an exemplary method by which an LEE CONNECT 350 may be performed in accordance with one embodiment of the present invention. In step 705 of FIG. 7, the LEE MAC 260 receives a ULIF_CONNECT_REQ command from the eHC 230. In step 710, the RFowner is determined and, if the RFowner is LEE, its RFstatus is subsequently determined (step 720). If the RFowner is not LEE, an error message is sent back to the eHC 230 and the eHC 230 initiates communication with the next stack indicated by the ''used radios" parameter (step 715). If the RFstatus is determined to be OFF, the RFstatus is turned ON by writing the RFstatus register of the eHC 230 to ON (step 725).

Once the RFstatus is turned ON, the LEE MAC 260 initiates the Connect service 350 (step 735). If there is a positive response to the Connect service 350 (step 740), the LEE MAC 260 transmits a ULIF_CONNECT_RSP packet to the eHC 230, informing the upper layers of the response to the Connect service 350. If an identifiable response is received from a remote device, the HCI_Connection_Complete_event command is returned to the Host 205 and a connection is established. In this manner, the LEE MAC 260 enters the Connected state 360, thus enabling the local and remote devices to communicate with one another. If, however, the response in step 740 is not positive, the eHC 230's LeaveRFtuned register is checked to see if it is set to ON (step 750). If this register is set to ON, the LEE MAC 260 may generate a ULIF_CONNECT_RSP (unsuccessful) packet 760 and then transmit it to the eHC 230 (step 760). When this occurs, the LEE MAC 260 enters the Idle state 320. If the LeaveRFtuned register is set to OFF, the RF connection is disabled by writing the RFstatus register of the eHC 230 to OFF (step 755). When this occurs, the eHC 230 may receive an unsuccessful connection response from the LEE MAC 260 (step 760), and the eHC 230 will set register RFowner = BT and register LeaveRFtuned = OFF.

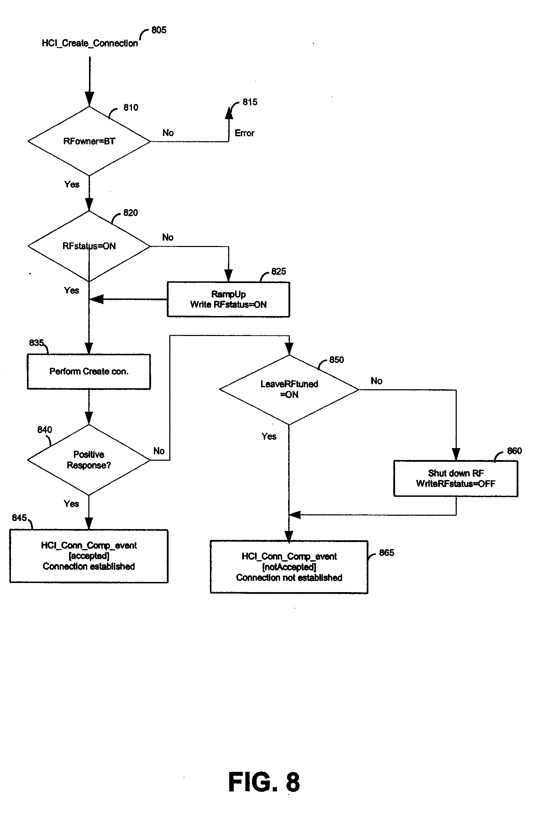

After the register RFowner is set to BT, the Bluetooth stack 270 will execute the operations according to FIG. 8. Figure 8 is a flow chart illustrating an exemplary method by which a Bluetooth connection may be performed in accordance with one embodiment of the present invention. In step 805 of FIG. 8, the Bluetooth stack 270 receives an HCI_Create_Connection command from the eHC 230. In step 810, the RFowner is determined and, if the RFowner is Bluetooth, the RFstatus is subsequently determined (step 820). If the RFowner is not Bluetooth an error message is sent back to the eHC 230 and the procedure may be terminated if the ''used radios" parameter does not require querying of another stack (step 815). If the RFstatus is determined to be OFF, the RFstatus is turned ON by writing the RFstatus register of the eHC 230 to ON (step 825).

Once the RFstatus is turned ON, the Bluetooth stack 270 performs an operation to create a connection (step 835). If there is a positive response to the attempt to create a connection (step 840), the Bluetooth stack 270 transmits an HCI_Conn_Comp_event packet indicating that a connection has been established to the eHC 230 (step 845). If, however, the response in step 840 is not positive, the eHC 230's LeaveRFtuned register is checked to see if it is set to ON (step 850). If this register is set to ON, the Bluetooth stack 270 may generate an HCI_Conn_Comp_event (connection not established) response and transmit it to the eHC 230 (step 865). If the LeaveRFtuned register is set to OFF, the RF connection is shut down by writing the RFstatus register of the eHC 230 to OFF (step 860) and, the Bluetooth stack 270 may then transmit a connection not-established response to the eHC 230 resulting in termination of the procedure (step 865).

### 5. HCI_Connection_Complete_event, HCI_Disconnect, HCI_Disconnection_Complete_event, HCI_Accept_Connection_Request and HCI_Reject_Connection Request

The HCI_Connection_Complete_event command includes the modified parameter "used radios" parameter, which is structured such that if the second lsb = 1, the LEE MAC 260 is enabled and if the third lsb = 1, the Bluetooth stack 270 is enabled. None of the basic Bluetooth parameters are modified with respect to the HCI Disconnect, HCI_Disconnection_Complete_event, HCI_Accept_Connection_Request and HCI_Reject_Connection_Request commands. The above commands may be used for disconnecting, accepting or requesting a connection in the Bluetooth or LEE protocols. They may also be forwarded to the correct protocol stack via their respective Connection_Handle packets. It is noted, that additional Bluetooth Link Control Commands, which are reserved for additional Bluetooth stacks, may be discarded by the eHC 230.

### B. Bluetooth Link Policy Commands and Events

### 1. HCI_Sniff_Mode, HCI_Exit_Sniff_Mode, HCI_Qos_Setup, HCI_Switch_Role and HCI_Role_Discovery

The Bluetooth Link Policy commands and events HCI_Sniff_Mode, HCI_Exit_Sniff_Mode, HCI_Qos_Setup, HCI_Switch_Role and HCI_Role_Discovery will be discussed in accordance with the present invention. No other Bluetooth Link Policy commands will be discussed as they are only relevant to the Bluetooth protocol and will not be modified for communication in the LEE and RFID protocols.

The HCI_Sniff_Mode command, which includes the conventional Bluetooth parameters: Connection_Handle, Sniff Max_Interval, Sniff Min_Interval, Sniff Attempt and Sniff_Timeout, is not modified in accordance with the present invention. The HCI_Sniff_Mode command is applicable only for the LEE and Bluetooth protocols, and when it is used with the LEE protocol it is translated to a ULIF_SNIFF_REQ packet, which is used to initiate a sniff procedure. When the HCI_Sniff_Mode command is used in Bluetooth, a Bluetooth sniff procedure will be initiated.

The Bluetooth HCI_Exit_Sniff_Mode command's parameters are not modified in accordance with the present invention. However, when operating in LEE, the command may be translated to a ULIF_SNIFF_REQ packet with the "sniffinterval" parameter set equal to 0. The HCI_QoS_Setup command also includes a new parameter "number_of_retransmissions." This command may be used for handling QoS parameters in Bluetooth. When the HCI_Qos_Setup command is used in LEE, the "number_of_retransmissions" parameter may be included. The conventional Bluetooth HCI_Switch_Role command is not modified. However, when operating in LEE a role switch may not occur during the Connected state 360. Rather, it must be selected before the Connect state 350. It is noted, that this command is applicable for only both the LEE and Bluetooth protocols. Finally, the conventional Bluetooth HCI_Role_Discovery command is not modified.

### C. Host Controller, Baseband Commands and Events

### 1. HCI_Reset, HCI_Flush and HCI_Read_Scan_Enable

The HCI_Reset command includes the "used radios" parameter, which is structured such that if the first least significant bit (lsb) = 1, the RFID reader/programmer stack 265 is enabled, if the second lsb = 1, the LEE MAC 260 is enabled and if the third lsb = 1, the Bluetooth stack 270 is enabled.. However, because the RF transceiver 250 is shared, the protocol stacks (i.e., LEE MAC 260, RFID reader/programmer 265 and Bluetooth stack 270) are always reset regardless of the value of the used radios parameter.

None of the conventional Bluetooth parameters are modified with respect to the HCI_Flush command and, thus it may be transmitted according to its Connection_Handle parameter. The HCI_Read_Scan_Enable command includes the "used radios" parameter, which is structured such that if the first least significant bit (lsb) = 1, the RFID reader/programmer stack 265 is enabled, if the second 1sb = 1, the LEE MAC 260 is enabled and if the third lsb = 1, the Bluetooth stack 270 is enabled.

### 2. HCI_Write_Scan_Enable

The HCI_Write_Scan_Enable command includes the parameter ''used radios" parameter, which is structured such that if the second lsb = 1, the LEE MAC 260 is enabled and if the third lsb = 1, the Bluetooth stack 270 is enabled.. The HCI_Write_Scan_Enable command also includes a new parameter, "scrvice_field_1_byte," which is provided when the LEE MAC 260 is enabled by the "used radios" parameter, and when its Scan_Enable parameter is set equal to 0x01 or 0x03, indicating that a valid scan for remote devices is taking place. The "service_field_1_byte" parameter also includes service field information as discussed below with respect to the Advertise service 330. The HCI_Write_Scan_Enable command additionally includes a new parameter, "advertising_interval_field_1_byte," which is provided when the LEE MAC 260 is enabled and the Scan_Enable parameter is set equal to 0x01 or 0x03, indicating that a valid scan for remote devices is taking place. The "advertising_interval_field_1_byte" parameter also includes the time period for which the Advertise service 330 may continue its scan.

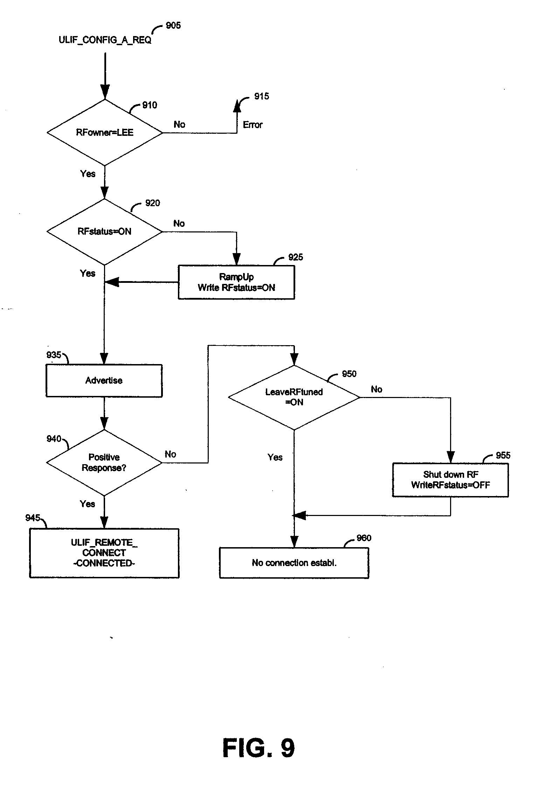

When an HCI_Write_Scan_Enable command is transmitted from the Host 205 to the eHC 230, the eHC 230 responds with an HCI_Command_Status_event packet and selects the protocol stack to be employed according to the "used radios" parameter, which in this case is the LEE MAC 260. Upon receipt of the HCI_Write_Scan_Enable command, the eHC 230 sets the register RFowner = LEE and register LeaveRFtuned = ON. Subsequently, the LEE MAC 260 is commanded by the eHC 230 to enter the Advertise 330 service. The LEE MAC 260 executes the Advertise service 330 according to FIG. 9.

Figure 9 is a flowchart illustrating an exemplary method by which an LEE Advertise 330 may be performed in accordance with one embodiment of the present invention. In step 905 of FIG. 9, the LEE MAC 260 receives a ULIF_CONFIG_A_REQ command, which is a request to start the Advertise service 330, from the eHC 230. In step 910, the RFowner is determined and, if the RFowner is LEE, the RFstatus is subsequently determined (step 920). If the RFowner is not LEE, an error message is sent back to the eHC 230, thus prompting the eHC 230 to query the next stack defined in the "used radios" parameter (step 915). If the RFstatus is determined to be OFF, the RFstatus is turned ON by writing the RFstatus register of the eHC 230 to ON (step 925).

Once the RFstatus is turned ON, the LEE MAC 260 performs the Advertise service 330 (step 935). If there is a positive response to the Advertise service 330, such as a response from a remote device that would like to connect to module 200 (step 940), the LEE MAC 260 transmits a ULIF_REMOTE_CONNECT packet indicating that it is connected to a remote device. In this manner, an HCI_Connection_Request_event command is sent to the Host 205 by the eHC 230 and, if the Host 205 accepts the connection request by transmitting an HCI_Accept_Connection_request command, the LEE MAC 260 may be transferred to the CONNECTED service 360 (step 945). Before any data is exchanged in step 945 the eHC 230 transmits an HCI_Connection_Complete_event command to the Host 205. If the response in step 940 is not positive, the eHC 230's LeaveRFtuned register is checked to see if it is set to ON (step 950). If the LeaveRFtuned register is set to ON, the LEE MAC 260 may generate a response indicating that connection has been established and forward it to the eHC 230 (step 960). If the LeaveRFtuned register is set to OFF, the RF connection is shut down by writing the RFstatus register of the eHC 230 to OFF and the eHC 230 moves to the next stack defmed by the "used radios" parameter (step 955). In this case, the eHC 230 would receive response indicating that no connection has been established from the LEE MAC 260 (step 960).

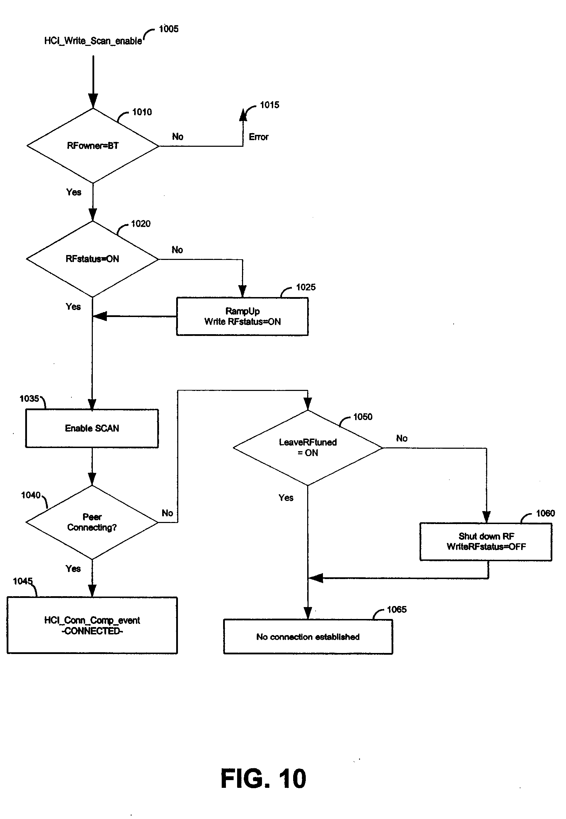

After completing the connection sequence with a remote LEE equipped device, the eHC 230 sets register RFowner = BT and register LeaveRFtuned = OFF. In this configuration, the Bluetooth stack 270 executes the operations illustrated in FIG. 10. Figure 10 is a flow chart illustrating an exemplary method by which a Bluetooth Scan is enabled in accordance with one embodiment of the present invention. In step 1005 of FIG. 10, the Bluetooth stack 270 receives an HCI_Write_Scan_enable command from the eHC 230. In step 1010, the RFowner is determined and, if the RFowner is Bluetooth, the RFstatus is subsequently determined (step 1020). If the RFowner is not Bluetooth, an error message is sent back to the eHC 230 and the Bluetooth scan is completed or restarted (step 1015). If the RFstatus is determined to be OFF, the RFstatus is turned ON by writing the RFstatus register of the eHC 230 to ON (step 1025).

Once the RFstatus is turned ON, the Bluetooth stack 270 performs an operation to scan for Bluetooth equipped devices in module 200's radio range (step 1035). If there is a positive response to the Scan operation, a Peer Connection is made (step 1040), and the Bluetooth stack 270 may transmit an HCI_Conn_Comp_event command to the eHC 230 indicating that a connection has been established (step 1045). If, however, a connection is not made in step 1040, the eHC 230's LeaveRFtuned register is checked to see if it is set to ON (step 1050). If this register is set to ON, the Bluetooth stack 270 may generate a no connection-established response and forward it to the eHC 230 (step 1065). If the LeaveRFtuned register is set to OFF, the RF connection is shut down by writing the RFstatus register of the eHC 230 to OFF in step 1060. In this case, the eHC 230 would receive a no connection-established response from the Bluetooth stack 265 (step 1065).

### 3. HCI_Connection_Request_event, HCI_Read_Page_Scan_Actvity, HCI_Write_Pagre_Scan_Activity, HCI_Read_Inquiry_Scan_Activity, HCI_Write_Inquiry_Scan_Activity and HCI_Host_Buffer_Size

The HCI_Connection_Request_event command, which includes the conventional Bluetooth parameters: BD_ADDR, Class_of_Device and Link_Type, also includes the "used radios" parameter, which is structured such that if the second lsb = 1, the LEE MAC 260 is enabled and if the third lsb = 1, the Bluetooth stack 270 is enabled. The RFID reader/programmer 265 does not use this command. HCI_Read_Page_Scan_Activity, HCI_Write_Page_Scan_Activity, HCI_Read_Inquiry_Scan_Activity, HCI_Write_Inquiry_Scan_Activity and HCI_Host_Buffer_Size commands include the "used radios" parameter, which is structured such that if the first least significant bit (lsb) = 1, the RFID reader/programmer stack 265 is enabled, if the second lsb = 1, the LEE MAC 260 is enabled and if the third lsb = 1, the Bluetooth stack 270 is enabled. It is noted, that additional Bluetooth Host Controller and Baseband Commands can be discarded in eHC 230 as they are only relevant to the Bluetooth protocol and will not be modified.

### D. Bluetooth Informational Parameters

### 1. HCI_Read_Buffer_Size and HCI_Read_BD_ADDR

HCI_Read_Buffer_Size and HCI_Read_BD_ADDR commands include the "used radios" parameter, which is structured such that if the first least significant bit (lsb) = 1, the RFID reader/programmer stack 265 is enabled, if the second lsb = 1, the LEE MAC 260 is enabled and if the third lsb = 1, the Bluetooth stack 270 is enabled. It is noted, that additional Bluetooth Informational parameters can be discarded in eHC 230 as they are only relevant to the Bluetooth protocol and will not be modified.

### E. Bluetooth Status Parameters

### 1. HCI_Read_RSSI

The HCI_Read_RSSI command includes the ''used radios" parameter, which is structured such that if the first least significant bit (lsb) = 1, the RFID reader/programmer stack 265 is enabled, if the second lsb = 1, the LEE MAC 260 is enabled and if the third lsb = 1, the Bluetooth stack 270 is enabled. It is noted, that additional commands for the Bluetooth Status parameters can be discarded in eHC 230 as they are only relevant to the Bluetooth protocol and will not be modified. In addition, the HCI testing commands are to be used only during Bluetooth communication not during LEE or RFID communication.

### F. Additional Modified Commands

### 1. HCI_TAG_Read_Request and HCI_TAG_Read_Response

HCI_TAG_Read_Request and HCI_TAG_Read_Response commands are dedicated to the RFID protocol stack (i.e., RFID reader/programmer 260). The HCI_TAG_Read_Request command may be used initiate an RFID tag's functionality, whereas the HCI_TAG_Read_Response command may be used to respond to the HCI_TAG_Read_Request.

It should be understood that the above description is only representative of illustrative embodiments. For the convenience of the reader, the above description has focused on a representative sample of possible embodiments, a sample that is illustrative of the principles of the present invention. The description has not attempted to exhaustively enumerate all possible variations. That alternate embodiments may not have been presented for a specific portion of the invention, or that further undescribed alternate embodiments may be available for a portion, is not to be considered a disclaimer of those alternate embodiments. Other applications and embodiments can be conceived by those without departing from the spirit and scope of the present invention. It is therefore intended, that the invention is not to be limited to the disclosed embodiments but is to be defined in accordance with the claims that follow. It can be appreciated that many of those undescribed embodiments are within the scope of the following claims, and others are equivalent.

## Claims

1. A system for integrating a plurality of short-range communication protocols, comprising:
a signaling protocol for enabling an enhanced host controller to share use of an RF transceiver between a plurality of communication modules using a plurality of short-range communications protocols.

2. The system of claim 1, wherein the plurality of short-range communication protocols operate in a same frequency area.

3. The system of claim 2, wherein the frequency area is a 2.4GHz frequency band.

4. The system of claim 1, wherein the plurality of short-range communication protocols is selected from a group comprising a Bluetooth communication protocol, an LEE communication protocol and an RFID communication protocol.

5. The system of claim 4, further comprising:
a signaling protocol for enabling the enhanced host controller to communicate with at least one of the plurality of communication modules using the LEE protocol.

6. The system of claim 4, further comprising:
a signaling protocol for enabling the enhanced host controller to communicate with at least one of the plurality of communication modules using the RFID protocol.

7. The system of claim 1, wherein the signaling protocol comprises a first parameter, which indicates the plurality of communication modules to which an upper layer command may be directed.

8. The system of claim 7, wherein the signaling protocol comprises a second parameter, which indicates an order of the plurality of communication modules in the first parameter.

9. The system of claim 1, wherein the enhanced host controller comprises at least one signaling protocol for enabling the enhanced host controller to communicate with at least one of the plurality of communication modules employing at least one of the plurality of short-range communication protocols.

10. A communication device for integrating a plurality of short-range communication protocols, comprising:
an RF transceiver;
a plurality of communication modules;
a host capable of using an enhanced signaling protocol; and
an enhanced host controller in communication with the host and the plurality of communication modules, wherein the enhanced host controller employs the enhanced signaling protocol to enable use of the RF transceiver to be shared between the plurality of communication modules.

11. The device of claim 10, wherein the plurality of short-range communication protocols operate in a same frequency area.

12. The device of claim 11, wherein the frequency area for the plurality of short-range communication protocols is a 2.4 GHz frequency band.

13. The device of claim 10, wherein the plurality of short-range communication protocols is selected from a group comprising a Bluetooth communication protocol, an LEE communication protocol and an RFID communication protocol.

14. The device of claim 13, further comprising:
a signaling protocol for enabling the enhanced host controller to communicate with at least one of the communication modules using the LEE protocol.

15. The device of claim 14, wherein the enhanced host controller translates information received from the communication module using the LEE protocol into a readable format for the host.

16. The device of claim 13, further comprising:
a signaling protocol for enabling the enhanced host controller to communicate with a communication module using the RFID protocol.

17. The device of claim 16, wherein the enhanced host controller translates information received from the communication module using the RFID protocol into a readable format for the host.

18. The device of claim 10, wherein the device is one of a cellular phone, laptop computer or a PDA.

19. The device of claim 10, wherein the enhanced host controller comprises at least one signaling protocol for enabling the enhanced host controller to communicate with at least one of the plurality of communication modules employing at least one of the plurality of short-range communication protocols.

20. A method of communicating between a first device and a second device, the first device having an enhanced host controller to share use of an RF transceiver between a plurality of communication modules using a plurality of short-range communications protocols, the method comprising:
selecting a communication module, in the first device, to transmit a wireless communication to the second device; and
transmitting the wireless communication, from the first device, to the second device within the first device's radio range.

21. The method of claim 20, wherein the communication module is selected according to a first parameter, wherein the first parameter indicates which of the plurality of communication modules is to be selected.

22. The method of claim 20, further comprising:
receiving, at the first device, a wireless communication from the second device; and
processing, at the first device, the wireless communication.

23. A system for integrating a plurality of short-range communication protocols, comprising:
a processor;
a memory, communicatively connected to the processor;
a program stored in the memory, including,
a module for enabling an enhanced host controller to share use of an RF transceiver between a plurality of communication modules using a plurality of short-range communications protocols.

24. A system for integrating a plurality of short-range communication protocols, comprising:
means for enabling an enhanced host controller to share use of an RF transceiver between a plurality of communication modules using a plurality of short-range communications protocols; and
means for enabling the enhanced host controller to communicate with at least one of the plurality of communication modules employing at least one of the plurality of short-range communication protocols.
